# EUROPEAN PATENT SPECIFICATION

(11) **EP 3 451 244 B1**
(45) Date of publication and mention of the grant of the patent: **01.01.2025**
(21) Application number: 17188475.2
(22) Date of filing: 30.08.2017
(51) Int. Cl.: G06Q 10/00, G06Q 50/04

(54) **DEVICE AND METHOD FOR USE IN AT LEAST ONE OF PRODUCTION OR PROCESSING OF METALLIC MATERIALS**
VORRICHTUNG UND VERFAHREN ZUR VERWENDUNG IN MINDESTENS EINER HERSTELLUNG ODER BEHANDLUNG VON METALLISCHEN MATERIALIEN
DISPOSITIF ET PROCÉDÉ POUR UTILISATION DANS AU MOINS LA PRODUCTION OU LE TRAITEMENT DE MATÉRIAUX MÉTALLIQUES

(43) Date of publication of application: 06.03.2019
(73) Proprietor: Robert Bosch GmbH, 70442 Stuttgart (DE)
(72) Inventor: Klopcic, Beno, 1231 Ljubljana Crnuce (SI); Belic, Igor, 1356 Dobrova (SI); Secic, Bojan, 3310 Zalec (SI); Cernivec, Gregor, 1218 Komenda (SI)

(56) References cited:
- US-A1- 2014 049 251
- US-A1- 2016 124 054

## Description

The present invention relates to an installation and a method for use in at least one of production or processing of metallic materials.

US 2014/0049251 A1 shows sensors having a basic U-core design and used for detecting a microstructure of a metal target which is moved quickly over a series of rollers so that close access to the metal target having an elevated temperature is restricted to one side only.

US 2016/0124054 A1 shows electronic circuits which are used in magnetic field sensors and which use transistors for passing a current through the transistors and also through a magnetoresistance element. The magnetic field sensors are used to detect the movement of a ferromagnetic target object.

In the production of products or processing of materials, the end products have to comprise a predetermined quality. The quality depends on the materials used in the production or processing. And, the quality regarding an industrial production or processing should usually be the same for the same production or processing of materials. As regards the quality of geometrically identical metallic materials, it is to be examined whether the metallic materials have the same quality as regards in particular the chemical, microstructural, etc. properties of the metallic materials.

A further requirement for a preferably simple and reliable production of products or processing of materials lies in that production tools may be damaged in case inappropriate material is used in the production or processing. This requirement is in particular important in case expensive production tools are used.

Usually, only a visual inspection is not enough to determine the quality of material which is used in the production of products or processing of materials. However, using a microstructural analysis for the determination of the material's properties currently requires an extraction of a sample, which in turn destroys the materials to be examined and is thus called destructive. The following sample preparation for performing an analysis or examination of the sample is time-consuming and expensive. The entire process of determining the properties of the material may take a few hours. This is unacceptable for any production or processing line.

As a consequence, the present production and/or processing process run/runs without a quality control of the material. This leads to uncontrolled quantities of scrap material as well as to further significant costs due to premature wear or even failure of tools.

Therefore it is the object of the present invention to provide an installation and a method for use in at least one of production or processing of metallic materials, which solve the above-mentioned problems and enable in particular an examination of the properties of metallic material in a fast and reliable manner with low costs and which is usable in an industrial process.

This object is solved by an installation for an industrial plant for production or processing of metallic materials according to claim 1. The installation comprises a controller for performing a control of a tool in at least one of production or processing of metallic materials one after the other and a device for use in the at least one of production or processing of metallic materials, wherein the device comprises a measuring bridge in which a first resistor and a first coil are connected in series and in which a second resistor and a second coil are connected in series, wherein the first coil has a core material which is used as a reference material and wherein the second coil is configured such that into the coil can be set a core material the properties of which are to be examined, an instrumental amplifier having a first input, which is connected to the connection of the first resistor and the first coil, and a second input, which is connected to the connection of the second resistor and the second coil, and an evaluating device for evaluating, when the core material the properties of which are to be examined is set in the second coil, the difference between a voltage input to the measuring bridge and a voltage output from the instrumental amplifier and for outputting the result to the controller , as described in claim 1.

The described device enables a very simple and reasonable manner of performing real time comparison of metallic material intended for further processing with a reference material. This realizes a fast, reasonable and reliable measurement and evaluation of the properties of metallic material on the basis of a non-destructive material examination.

The non-destructive material examination performed by the described device has the additional advantage that the material examined with the device can be processed further. Due to this, the examination results given by the device can be correlated to every material which is finally used for an end product. The non-destructive material examination results in less waste, too. This is advantageous as regards a careful handling of resources.

It is a further advantage that the described device uses a simple design of the electronics. This leads to a device which is cost effective in production and maintenance.

As another advantage of the described device, tools necessary for working the material can be planned in advance. This leads to less damage to the tools used and/or to less wear of the tools used in the industrial process. Consequently, also the failure of the tools can be minimized which leads to a prolonged life time of the tools, as well.

Advantageous further developments of the device are given in the dependent claims.

In one embodiment, the evaluating device is configured to examine the difference between the amplitude of the voltage input to the measuring bridge and the amplitude of the voltage output from the instrumental amplifier and to examine the phase shift between the voltage input to the measuring bridge and the voltage output from the instrumental amplifier.

It is advantageous to achieve a good performance of the device, if the resistance value of the first resistor and the resistance value of the second resistor are equal to each other, and wherein the inductivity of the first coil and the inductivity of the second coil are equal to each other.

In one specific implementation, the core material of the first coil is made from steel or aluminium.

In one embodiment, the device is configured to examine the microstructure and/or the chemical composition of the core material of the second coil.

The above-described device may deliver a result to a welding installation which further comprises a welding tool for producing a welded joint one after another at least two different components which comprise each at least one metallic material, and a welding controller for controlling the welding tool, wherein the welding controller is configured to choose at least one parameter and/or set value used in the control of the welding tool based on a result delivered by the above-described device, and wherein the device is configured to examine the at least one metallic material of the at least two different components.

The above-described device may be part of an industrial plant for producing and/or processing metallic materials, the industrial plant further comprising a tool which is controlled by a controller for mounting or demounting a connection between at least one metallic material, and a transport device for transporting to the tool one after the other components which comprise at least one metallic material, wherein the device examines at least one of the components or at least one metallic material, and wherein the controller is configured to choose at least one parameter and/or set value used in the control of the tool based on a result delivered by the device.

The industrial plant may further comprise a device for moving the tool around, and wherein the industrial plant is used for producing vehicle bodies or building constructions from the metallic materials.

The tool of the industrial plant can be chosen from one of a welding tool, a punch tool, a die-cutting tool, a drilling tool, a milling tool, a turning tool, a screw driving tool.

The above-described object is further solved by a method for use in at least one of production or processing of metallic materials according to claim 11. The method comprises the steps of measuring the difference between a voltage input to a measuring bridge and a voltage output from an instrumental amplifier, wherein the measuring bridge comprises a first resistor and a first coil which are connected in series and comprises a second resistor and a second coil which are connected in series, wherein the first coil has a core material which is used as a reference material, wherein the second coil has a core material the properties of which are to be examined, and wherein the instrumental amplifier has a first input, which is connected to the connection of the first resistor and the first coil, and a second input, which is connected to the connection of the second resistor and the second coil, evaluating, by an evaluating device, the difference between the voltage input to the measuring bridge and the voltage output from the instrumental amplifier, and outputting the result to a controller for adapting a control performed by the controller in the at least one of production or processing of metallic materials, as described in claim 11.

The method achieves the same advantages as they are mentioned above in respect of the device.

Further possible implementations of the invention comprise also combinations of features or styles described above or in the following with reference to the embodiments, even if they are not explicitly mentioned. Herein, the person skilled in the art will also add single aspects as improvements or additions to the respective basic form of the invention.

Further implementations of the invention are subject matter of the embodiments of the invention described in the following.

In the following, the invention is described in more detail by means of embodiments and with reference to the appended drawing figures, wherein:
Fig. 1 shows a schematic block diagram of an industrial plant comprising a device according to a first embodiment;
Fig. 2 shows an electric circuit diagram of the device according to the first embodiment;
Fig 3 shows a first example for a time chart of signals which are generated in the operation of the device according to the first embodiment;
Fig. 4 shows a second example for a time chart of signals which are generated in the operation of a device according to a second embodiment; and
Fig. 5 shows a third example for a time chart of signals which are generated in the operation of the device according to the second embodiment.

In the drawing figures, the same or functionally same elements are provided with the same reference signs unless given otherwise.

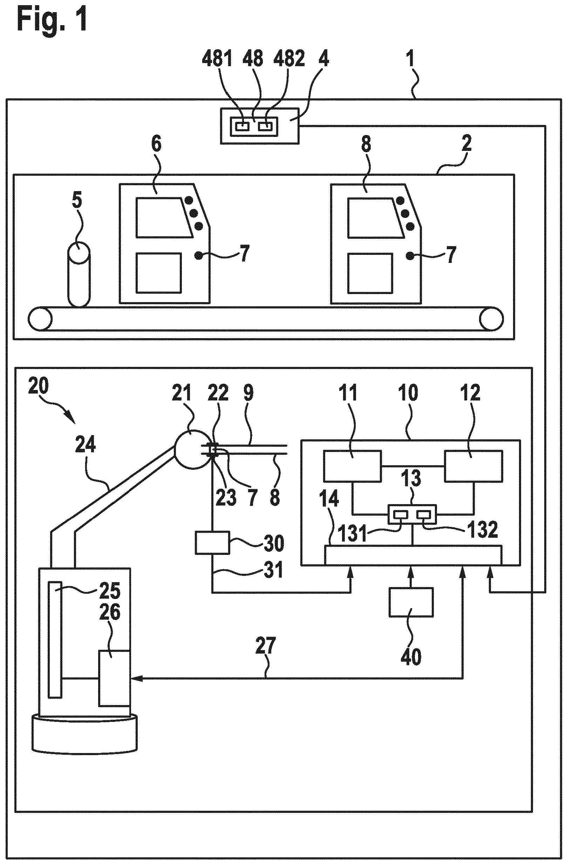

Fig. 1 shows very schematically an industrial plant 1 comprising a transport device 2, an installation, which is in the example of Fig. 1 a welding installation, and a device 4 for examining the properties of metallic material 5, 6. Even if the industrial plant 1 is described in the following on the basis of a welding installation and its components as an example, the industrial plant 1 is not delimited thereby.

The industrial plant 1 can be used for production and/or processing of metallic objects and can thus be used, for example, in the field of metallurgy, in the field of metal casting, in particular, iron casting, in the automotive industry, for example for flat spring steel, metal sheets, and so on, in the field of in-line steel production, in the field of quality testing and sorting, in the field of quality testing of purchased steel materials. Thus, the industrial plant 1 is applicable in all fields in which metallic materials 5, 6 are produced and/or processed and/or used. The objects might also be parts of a vehicle body, for example. Of course, all other products comprising at least partly metallic materials 5, 6 are conceivable, as well.

The metallic material 5, 6 may comprise a material 5 having a rather simple geometric structure like an axle, a rod, a sheet, a tube, and so on, for example. Alternatively, the metallic material 5, 6 may comprise a material 6 which is part of a comparably elaborate construction like a vehicle body, a support construction of a table, and so on, for example. The metallic material 5, 6 may be at least one of iron, steel, copper, aluminium, and so on or combinations thereof.

The transport device 2 is optional and may be used to transport the metallic materials 5, 6 and/or objects and/or components 8, 9 between different working stations. The objects may be formed from or with the metallic materials 5, 6. The transport device 2 may be a transport band as shown in Fig. 1. However, the transport device 2 may be a robot or any other device usable for transporting the metallic materials 5, 6 and/or objects and/or components 8, 9 between different working stations.

The welding installation may be located and used in at least one of the working stations. However, other tools for processing the metallic materials 5, 6 may be applied additionally or alternatively, like a punch tool, a die-cutting tool, a drilling tool, a milling tool, a turning tool, a screw driving tool, and so on.

The welding installation is constructed to form welded joints 7 to join at least one of the metallic materials 5, 6. The welding installation may also be constructed to form welded joints 7 to join at least one component 8, 9, which are at least partly formed from metal. The at least one component 8, 9 may comprise one or more metallic materials 5, 6. A welded joint 7 may combine two edges of one metallic materials 5, 6, for example. A welded joint 7 may combine two edges of one component 8, 9, for example.

For forming the welded joints 7, the installation comprises a controller 10, which is for a welding installation a welding controller. The installation further comprises a device 20 for moving a tool 21, a detecting unit 30 and an operation unit 40. The tool 21 is as regards a welding installation a welding tool 21.

The device 20 may be, in particular, a robot or any other device usable for transporting the tool 21 around, in particular at least partly to the metallic materials 5, 6 and/or objects and/or components 8, 9. The detecting unit 30 is used to detect the conditions which are present when forming a welded joint 7. The operation unit 40 may be, for example, a keyboard and/or a mouse, a laptop, a touch sensitive monitor, a touch insensitive monitor, and so on, or combinations thereof.

The welding controller 10 comprises a determining unit 11, an evaluation unit 12, a welding storing unit 13 and an interface 14. The welding storing unit 13 serves for storing data 131 like internal basic parameters and/or set values of a welding operation to be performed with the welding tool 21. The internal basic parameters and/or set values might be input and stored already in the factory in which the welding controller is produced. Additionally or alternatively, the internal basic parameters and/or set values might be input and stored later on by a user of the welding installation by using the operation unit 40.

The internal basic parameters and/or set values might be parameters of the welding tool 21. Additionally or alternatively, the internal basic parameters and/or set values might be parameters of the welding controller 10 with which the welding tool 21 is controlled. In particular, the internal basic parameters and/or set values are a leading edge of a welding current I and a resistor R of the welding tool 21 in forming or producing a welded joint 7. Further, data 132 detected by the detecting unit 30 as regards the forming or producing a welded joint 7 can be transmitted via a connection line 31 and the interface 14 and stored in the welding storing unit 13.

In addition, the determining unit 11 and the evaluation unit 12 can access and retrieve the data 131, 132 stored in the welding storing unit 13 or store data as a result of the determination performed by the determining unit 11 and the evaluation performed by the evaluation unit 12 in the welding storing unit 13.

The device 20 for moving the welding tool 21 can be used to form with the welding tool 21 a weld spot or a weld seam as the welded joint 7. The welding tool 21 can be, for example, a welding gun having at least one electrode cap 22, 23. The device 20 can move or guide the welding tool 21 with the use of the arm 24. The device 20 is controlled by a control unit 25. For this purpose, the device 20 is connected via a line 27 with the interface 14 to exchange control commands with the welding controller 10 for guiding the welding tool 21. In addition, the internal basic parameters and/or set values stored in the welding storing unit 13 may be parameters and/or set values of the control unit 25 on the basis of which the control of the welding tool 21 is performed.

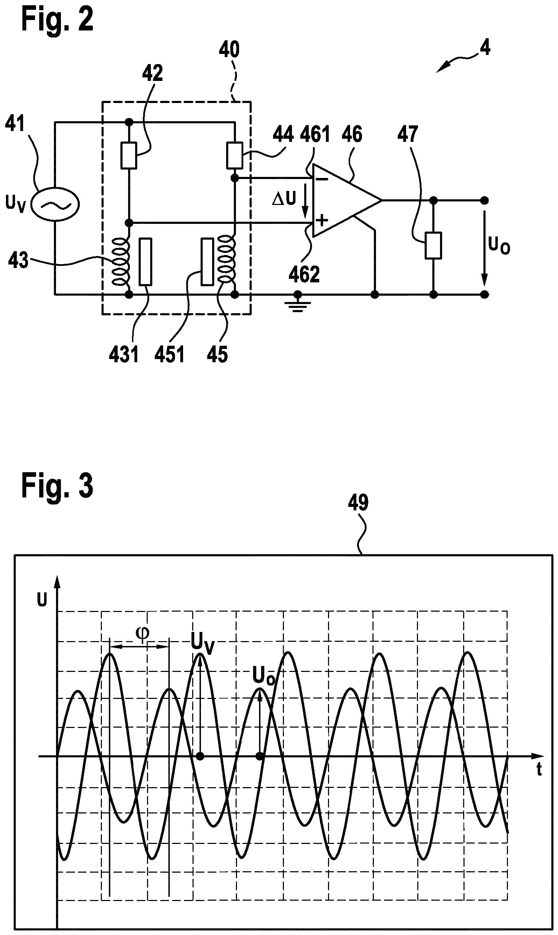

The device 4 comprises besides others a storing unit 48 and an evaluating device 49. The storing unit 48 is used to store data 481 as regards at least one reference material. The storing unit 48 is further used to store results 482 of an examination performed with the device 4 by the use of the evaluating device 49 and other components of the device 4. The device 4 is used to test or examine the metallic materials 5, 6 in line as described in further detail by reference to Fig. 2 and Fig. 3.

According to Fig. 2, the device 4 comprises a voltage source 41 which feeds an alternating voltage Uv to a measuring bridge 40 which comprises a first and second series connection. The first series connection comprises a first resistor 42 connected in series to a first coil 43. The first coil 43 has a core material 431 which is shown in Fig. 2 only very schematically. The second series connection comprises a second resistor 44 connected in series to a second coil 45. The second coil 45 has a core material 451 which is shown in Fig. 2 only very schematically. The device 4 further comprises an instrumental amplifier 46 and a third resistor 47 as a load. The instrumental amplifier 46 has a first input 461 and a second input 462. The first input 461, which is the positive input of the instrumental amplifier 46 in the example of Fig. 2, is connected to the connection between the first resistor 42 and the first coil 43. The second input 462, which is the negative input of the instrumental amplifier 46 in the example of Fig. 2, is connected to the connection between the second resistor 44 and the second coil 45. Thus, a voltage difference ΔU present between the negative input 461 of the instrumental amplifier 46 and the positive input 462 of the instrumental amplifier 46 will be amplified by the instrumental amplifier 46 and will be output as an output voltage Uo. The output voltage Uo is measurable as a voltage at the third resistor 47.

To achieve a good performance for a measuring method performed with the device 4, the resistance value R1 of the first resistor 42 and the resistance value R1 of the second resistor R2 are chosen to be equal to each other. And, the inductivity L1 of the first coil 43 and the inductivity L2 of the second coil 45 are chosen to be equal to each other. The core material 431 of the first coil 43 represents a reference material. The data of the reference material, namely the core material 431 is stored as the data 481 mentioned with reference to Fig. 1. The core material 431 of the first coil 43 may be made from steel, aluminium, etc. The core material 451 of the second coil 45 contains the material 5, 6 which is to be examined with the device 4. The measuring bridge 40 is thus constructed such that the material 5, 6 which is to be examined with the device 4 is compared with the reference material which is the core material 431 of the first coil 43.

In operation of the industrial plant 1, metallic materials 5, 6 transported by the transport device 2 or processed by the welding installation can be tested or examined by the device 4. The metallic materials 5, 6 are set one after the other into the second coil 45 as the core material 451. The second coil 45 comprises thus a geometrical shape which is adapted to the geometrical shape of the metallic materials 5, 6 to be tested or examined. The device 4 can excite the measuring bridge by a sinusoidal voltage Uv. The instrumental amplifier 46 provides an adequate amplification with a frequency bandwidth and with the amplification versus frequency characteristic for the in-phase as well as for the counter-phase input signals. Thus, the output voltage Uo can be measured.

Fig. 3 shows the output of the oscilloscope as the evaluating device 49 with which the device 4 may illustrate and examine the signals of the sinusoidal excitation voltage Uv, which is input to the measuring bridge 40, and the output voltage Uo. The signals are present or develop when performing the examination method with the device 4. The specific example shown in Fig. 3 relates to the measurement of a material 5, 6 as a sample. The sample contains a material which is very similar to the core material 431 as the reference material. In the present example, the inputted excitation voltage Uv has a larger amplitude than the output voltage Uo. And, the output voltage Uo has in this specific example a phase shift ϕ relative to the excitation voltage Uv. Thus, the evaluating device 49 is used to measure the excitation voltage Uv, the output voltage Uo, and the phase shift ϕ between the excitation voltage Uv and the output voltage Uo.

In case the core materials 431, 451 are very similar, the output voltage Uo remains low as shown in Fig. 3 and described before. The output voltage Uo and the phase shift ϕ are primarily dependent on the difference ΔU in the voltage potentials at the positive input 462 and the negative input 461 of the instrumental amplifier 46. The potential difference ΔU originates from different voltage drops on the respective coils 43 and 45 due to their distinctive inductivity value which is influenced by the reference metallic core material 431 and the metallic core material 451 which is examined or under investigation.

In case the core materials 431, 451 are different, measurements of the device 4 exhibit higher output voltages Uo. Further in this case, a larger phase shift ϕ between the excitation voltage Uv and the output voltage Uo is measured than in the case where the core materials 431, 451 are very similar.

In general, the amplitude of the output voltage Uo and the phase shift ϕ between the excitation voltage Uv and the output voltage Uo indicate how similar or different the core materials 431, 451 are. The results of the measurement can be stored as the examination result 482 in the storing unit 48 of the device 4.

The examination result 482 can be output by the device 4 to the welding installation, in particular, the welding controller 10. The welding controller 10 can thus configure the welding tool 21 accordingly to achieve the optimized welded joints 7. For example, the electrode caps 22, 23 of the welding tool 21 can be chosen dependent on the examination result 482. Additionally or alternatively, the parameters and/or set values as data 131 used for forming the welding joints 7 can be chosen according to the examination result 482 output by the device 4.

Thus, the described device 4 and the method performed by the device 4 perform a fast in-line testing or examination of the metallic materials 5, 6. The examination is made as a comparative examination which allows decisions on the quality of the metallic material 5, 6 within a time smaller than 1 s. This is a significant advantage over the usual way of testing or examining the quality of metallic materials 5, 6.

According to a second embodiment, the device 4 of Fig. 1 and Fig. 2 is also configured to examine the microstructural properties and/or chemical composition of the metallic materials 5, 6. In this case, the data 481 of more than one reference material is stored in the storing unit of the device 4. In this case, the device 4 performs a row of measurements to find out the reference material which has the microstructure and/or chemical composition which is the closest to the microstructure and/or chemical composition of the metallic material 5, 6 which is to be examined.

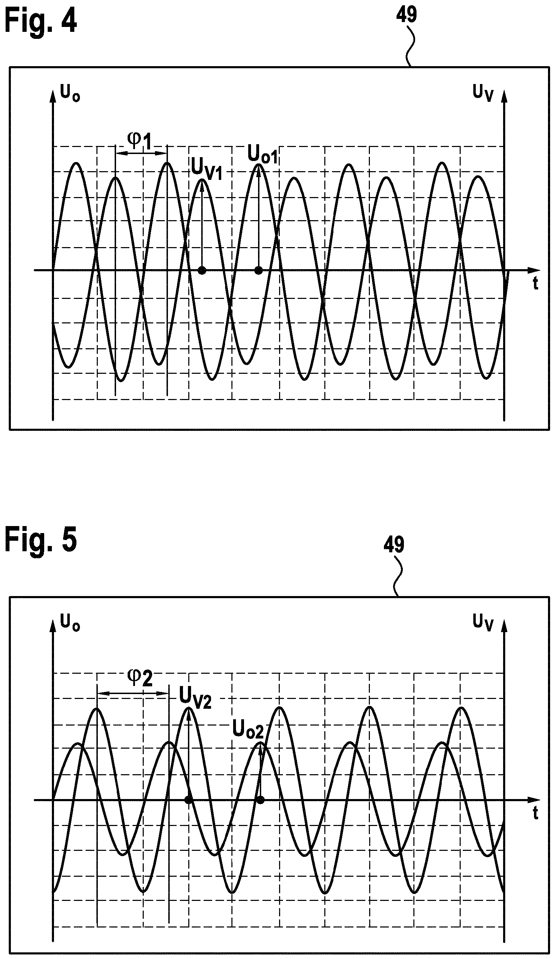

Fig. 4 and Fig. 5 shows the output of the oscilloscope as the evaluating device 49 with which the device 4 may illustrate and examine the signals of the sinusoidal excitation voltage Uv in relation to the output voltages Uo1 and Uo2 which are present or develop when performing the examination method with the device 4 according to the second embodiment.

In the specific example of Fig. 4, a sample measurement of a metallic material 5, 6 is performed which contains a material which is different from the material of the reference material. According to the output of the evaluating device 49, an excitation voltage U_{V1} is used. The evaluating device 49 measures in this case an output voltage Uo1 and a phase shift ϕ1 between the excitation voltage U_{V1} and the output voltage Uo1.

In the specific example of Fig. 5, a sample measurement of a metallic material 5, 6 is performed which contains a material which is only slightly different from the material of the reference material. According to the output of the evaluating device 49, an excitation voltage U_{V2} is used, as well. The evaluating device 49 measures in this case an output voltage Uo2 and a phase shift ϕ2 between the excitation voltage U_{V2} and the output voltage Uo2. The output voltage Uo2 is smaller than the output voltage Uo1. The phase shift ϕ2 is smaller than the phase shift ϕ1.

The device can use the data of the at least two reference materials to achieve the examination result 482. The examination can be stopped when a result is achieved which is rather similar to result shown in Fig. 5. For this purpose, tolerance bands can be defined. Alternatively, all available data of the reference materials can be used and the result which has the highest similarity with the result for the reference material is used as the examination result 482.

As in the first embodiment, the examination result 482 can then be output by the device 4 to the welding installation, in particular, the welding controller 10. The welding controller 10 can thus configure the welding tool 21 accordingly to achieve the optimized welded joints 7.

Thus, also the described device 4 and the method according to the second embodiment can be performed by the device 4 to perform a fast in-line testing or examination of the metallic materials 5, 6.

All of the above-described implementations of the industrial plant 1, the device 4 and the above-described examination method can be used separately or in all possible combinations thereof. The features of the first and second embodiments and/or their modifications can be combined arbitrarily. Moreover, in particular, the following modifications are conceivable.

The elements shown in the figures are depicted schematically and can differ in the specific implementations from the forms shown in the figures provided that the above-described functions are ensured. The transport direction of the containers 2 is further shown only as an example and can also be reversed.

The industrial plant 1 may use the examination results 482 of the device 4 not only for a welding installation. The examination results 482 can be used additionally or alternatively for other tools for processing the metallic materials 5, 6. That is, the examination results 482 can be used for configuring at least one of the following tools which comprise a punch tool, a die-cutting tool, a drilling tool, a milling tool, a turning tool, a screw driving tool, and so on.

The evaluating device 49 may be implemented by an arbitrary device able to performing a comparative measurement of two different signals. The evaluating device 49 may be implemented at least partly with software.

## Claims

1. Installation for an industrial plant (1) for production and/or processing metallic materials (5, 6), the installation and/or the industrial plant (1) being configured to apply a tool (21) for production and/or processing metallic materials (5, 6) in the industrial plant (1), the installation comprising
a controller (10) for performing a control of the tool (21) in at least one of production or processing of metallic materials (5, 6) one after the other, and
a device (4) for use in the at least one of production or processing of the metallic materials (5, 6), the device (4) comprising
a measuring bridge (40) in which a first resistor (42) and a first coil (43) are connected in series and in which a second resistor (42) and a second coil (43) are connected in series, wherein the first coil (43) has a core material (431) which is used as a reference material and wherein the second coil (45) is configured such that into the coil can be set one after the other the metallic material (5, 6) as a core material (451) the properties of which are to be examined,
an instrumental amplifier (46) having a first input (461), which is connected to the connection of the first resistor (42) and the first coil (43), and a second input (462), which is connected to the connection of the second resistor (44) and the second coil (45), and
an evaluating device (49) for evaluating, when the metallic material (5, 6) as the core material (451) the properties of which are to be examined is set in the second coil (45), the difference (ΔU) between a voltage (Uv) input to the measuring bridge (40) and a voltage (Uo) output from the instrumental amplifier (46) and for outputting the result (482) to the controller (10) for adapting the control of the tool (21) performed by the controller (10),
wherein the controller (10) is configured to adapt the control of the tool (21) by choosing, on the basis of the result outputted by the evaluating device (49), at least one parameter and/or set value used in the control of the tool (21) in processing the metallic material (5, 6) the properties of which were examined by the device (4), and/or
wherein the controller (10) is configured to adapt, on the basis of the result outputted by the evaluating device (49), the configuration of the tool (21) in the at least one of production or processing of the metallic material (5, 6) the properties of which were examined by the device (4).

2. Installation according to claim 1, wherein the evaluating device (49) is configured to examine the difference (ΔU) between the amplitude of the voltage (Uv) input to the measuring bridge (40) and the amplitude of the voltage (Uo; Uo1; Uo2) output from the instrumental amplifier (46) and to examine the phase shift (ϕ; ϕ1; ϕ2) between the voltage (Uv) input to the measuring bridge (40) and the voltage (Uo; Uo1; Uo2) output from the instrumental amplifier (46).

3. Installation according to claim 1 or 2,
wherein the resistance value of the first resistor (42) and the resistance value of the second resistor (44) are equal to each other, and
wherein the inductivity of the first coil (43) and the inductivity of the second coil (45) are equal to each other.

4. Installation according to any one of the preceding claims, wherein the core material (431) of the first coil (43) is made from steel or aluminium.

5. Installation according to any one of the preceding claims, wherein the device (4) is configured to examine the microstructure and/or the chemical composition of the core material (451) of the second coil (45).

6. Installation according to any one of the preceding claims, wherein the second coil (45) comprises a geometrical shape which is adapted to the geometrical shape of the core material (451) the properties of which are to be tested or examined.

7. Installation according to any one of the preceding claims, wherein the tool (21) is a tool chosen from one of a welding tool, a punch tool, a die-cutting tool, a drilling tool, a milling tool, a turning tool, a screw driving tool.

8. Installation according to any one of the preceding claims, wherein the installation is a welding installation, comprising
a welding tool (21) for producing a welded joint (7) one after another at at least two different components (8; 8, 9) which comprise each at least one metallic material (5; 5, 6),
wherein the controller is a welding controller (10) for controlling the welding tool (21),
wherein the welding controller (10) is configured to choose at least one parameter and/or set value used in the control of the welding tool (21) based on a result (482) delivered by the device (4), and
wherein the device (4) is configured to examine the at least one metallic material (5; 5, 6) of the at least two different components (8; 8, 9).

9. Industrial plant (1) for producing and/or processing metallic materials (5, 6), the industrial plant (1) comprising a tool (21) which is controlled by a controller (10) for mounting or demounting a connection between at least one metallic material (5, 6), a transport device (2) for transporting to the tool (21) one after the other components (8; 8, 9) which comprise at least one metallic material (5; 5, 6), and
an installation according to any one of the claims 1 to 8,
wherein the device (4) examines at least one of the components (8; 8, 9) or at least one metallic material (5; 5, 6), and
wherein the controller (10) is configured to choose at least one parameter and/or set value used in the control of the tool (21) based on a result (482) delivered by the device (4).

10. Industrial plant (1) according to claim 9, further comprising
a device (20) for moving the tool (21) around, and
wherein the industrial plant (1) is used for producing vehicle bodies or building constructions from the metallic materials (5; 5, 6).

11. Method for use in at least one of production or processing of metallic materials (5, 6), the method comprising the steps of
measuring the difference (ΔU) between a voltage (Uv) input to a measuring bridge (40) and a voltage (Uₒ) output from an instrumental amplifier (46), wherein the measuring bridge (40) comprises a first resistor (42) and a first coil (43) which are connected in series and comprises a second resistor (42) and a second coil (43) which are connected in series, wherein the first coil (43) has a core material (431) which is used as a reference material, wherein into the second coil (45) is set one after the other the metallic material (5, 6) as a core material (451) the properties of which are to be examined, and wherein the instrumental amplifier (46) has a first input (461), which is connected to the connection of the first resistor (42) and the first coil (43), and a second input (462), which is connected to the connection of the second resistor (44) and the second coil (45),
evaluating, by an evaluating device (49), when the metallic material (5, 6) as the core material (451) the properties of which are to be examined is set in the second coil (45), the difference (ΔU) between the voltage (Uv) input to the measuring bridge (40) and the voltage (Uₒ) output from the instrumental amplifier (46), and
outputting, by the evaluating device (49), the result (482) to a controller (10) for performing a control of a tool (21) in the at least one of production or processing of metallic materials (5, 6) one after the other, and
adapting, by the controller (10), the control of the tool (21) by choosing, on the basis of the result outputted by the evaluating device (49), at least one parameter and/or set value used in the control of the tool (21) in processing the metallic material (5, 6) the properties of which were examined by the steps of measuring and evaluating, and/or
adapting, by the controller (10), on the basis of the result outputted by the evaluating device (49), the configuration of the tool (21) in the at least one of production or processing of the metallic material (5, 6) the properties of which were examined by the steps of measuring and evaluating.

12. Method according to claim 11, wherein the core material (451) the properties of which are to be examined is transported by a transport device (2) or processed by an industrial plant (1) and is set one after another into the second coil (45) to examine the properties of the core material (451).

## Patentansprüche

1. Einrichtung für eine Industrieanlage (1) zur Herstellung und/oder Verarbeitung metallischer Materialien (5, 6), wobei die Einrichtung und/oder die Industrieanlage (1) dazu ausgelegt ist, ein Werkzeug (21) zur Herstellung und/oder Verarbeitung metallischer Materialien (5, 6) in der Industrieanlage (1) anzuwenden, wobei die Einrichtung umfasst
eine Steuereinheit (10) zum Durchführen einer Steuerung des Werkzeugs (21) bei mindestens einem einer Herstellung oder Verarbeitung metallischer Materialien (5, 6) nacheinander, und
eine Vorrichtung (4) zur Verwendung bei dem mindestens einen einer Herstellung oder Verarbeitung der metallischen Materialien (5, 6), wobei die Vorrichtung (4) umfasst
eine Messbrücke (40), in der ein erster Widerstand (42) und eine erste Spule (43) in Reihe verbunden sind und in der ein zweiter Widerstand (42) und eine zweite Spule (43) in Reihe verbunden sind, wobei die erste Spule (43) ein Kernmaterial (431) aufweist, das als ein Referenzmaterial verwendet wird, und wobei die zweite Spule (45) derart ausgelegt ist, dass in die Spule nacheinander das metallische Material (5, 6) als ein Kernmaterial (451), dessen Eigenschaften untersucht werden sollen, eingesetzt werden kann,
einen Instrumentenverstärker (46) mit einem ersten Eingang (461), der mit der Verbindung des ersten Widerstands (42) und der ersten Spule (43) verbunden ist, und einem zweiten Eingang (462), der mit der Verbindung des zweiten Widerstands (44) und der zweiten Spule (45) verbunden ist, und
eine Auswertevorrichtung (49) zum Auswerten, wenn das metallische Material (5, 6) als das Kernmaterial (451), dessen Eigenschaften untersucht werden sollen, in der zweiten Spule (45) eingesetzt ist, der Differenz (ΔU) zwischen einer zu der Messbrücke (40) eingehenden Spannung (Uv) und einer von dem Instrumentenverstärker (46) ausgegebenen Spannung (Uo) und zum Ausgeben des Ergebnisses (482) an die Steuereinheit (10) zum Anpassen der Steuerung des Werkzeugs (21), die durch die Steuereinheit (10) durchgeführt wird,
wobei die Steuereinheit (10) dazu ausgelegt ist, die Steuerung des Werkzeugs (21) anzupassen, indem basierend auf dem durch die Auswertevorrichtung (49) ausgegebenen Ergebnis mindestens ein Parameter und/oder ein Sollwert ausgewählt wird, der bei der Steuerung des Werkzeugs (21) bei der Verarbeitung des metallischen Materials (5, 6), dessen Eigenschaften durch die Vorrichtung (4) untersucht wurden, verwendet wird, und/oder
wobei die Steuereinheit (10) dazu ausgelegt ist, basierend auf dem durch die Auswertevorrichtung (49) ausgegebenen Ergebnis die Auslegung des Werkzeugs (21) bei dem mindestens einen einer Herstellung oder Verarbeitung des metallischen Materials (5, 6), dessen Eigenschaften durch die Vorrichtung (4) untersucht wurden, anzupassen.

2. Einrichtung nach Anspruch 1, wobei die Auswertevorrichtung (49) dazu ausgelegt ist, die Differenz (ΔU) zwischen der Amplitude der zu der Messbrücke (40) eingehenden Spannung (U_{V}) und der Amplitude der von dem Instrumentenverstärker (46) ausgegebenen Spannung (Uo; Uo1; Uo2) zu untersuchen und die Phasenverschiebung (φ; φ1; φ2) zwischen der zu der Messbrücke (40) eingehenden Spannung (U_{V}) und der von dem Instrumentenverstärker (46) ausgegebenen Spannung (Uo; Uo1; Uo2) zu untersuchen.

3. Einrichtung nach Anspruch 1 oder 2,
wobei der Widerstandswert des ersten Widerstands (42) und der Widerstandswert des zweiten Widerstands (44) zueinander gleich sind, und
wobei die Induktivität der ersten Spule (43) und die Induktivität der zweiten Spule (45) zueinander gleich sind.

4. Einrichtung nach einem der vorhergehenden Ansprüche, wobei das Kernmaterial (431) der ersten Spule (43) aus Stahl oder Aluminium hergestellt ist.

5. Einrichtung nach einem der vorhergehenden Ansprüche, wobei die Vorrichtung (4) dazu ausgelegt ist, die Mikrostruktur und/oder die chemische Zusammensetzung des Kernmaterials (451) der zweiten Spule (45) zu untersuchen.

6. Einrichtung nach einem der vorhergehenden Ansprüche, wobei die zweite Spule (45) eine geometrische Form aufweist, die an die geometrische Form des Kernmaterials (451), dessen Eigenschaften geprüft oder untersucht werden sollen, angepasst ist.

7. Einrichtung nach einem der vorhergehenden Ansprüche, wobei das Werkzeug (21) ein Werkzeug ist, das aus einem von einem Schweißwerkzeug, einem Lochwerkzeug, einem Stanzwerkzeug, einem Bohrwerkzeug, einem Fräswerkzeug, einem Drehwerkzeug, einem Schraubwerkzeug ausgewählt ist.

8. Einrichtung nach einem der vorhergehenden Ansprüche, wobei die Einrichtung eine Schweißeinrichtung ist, umfassend
ein Schweißwerkzeug (21) zum Herstellen einer Schweißverbindung (7) nacheinander an mindestens zwei verschiedenen Komponenten (8; 8, 9), die jeweils mindestens ein metallisches Material (5; 5, 6) umfassen,
wobei die Steuereinheit eine Schweißsteuereinheit (10) zum Steuern des Schweißwerkzeugs (21) ist,
wobei die Schweißsteuereinheit (10) dazu ausgelegt ist, mindestens einen bei der Steuerung des Schweißwerkzeugs (21) verwendeten Parameter und/oder Sollwert basierend auf einem durch die Vorrichtung (4) gelieferten Ergebnis (482) auszuwählen, und
wobei die Vorrichtung (4) dazu ausgelegt ist, das mindestens eine metallische Material (5; 5, 6) der mindestens zwei verschiedenen Komponenten (8; 8, 9) zu untersuchen.

9. Industrieanlage (1) zum Herstellen und/oder Verarbeiten metallischer Materialien (5, 6), wobei die Industrieanlage (1) umfasst: ein Werkzeug (21), das von einer Steuereinheit (10) gesteuert wird, zur Montage oder Demontage einer Verbindung zwischen mindestens einem metallischen Material (5, 6), eine Transportvorrichtung (2) zum Transportieren von Komponenten (8; 8, 9), die mindestens ein metallisches Material (5; 5, 6) umfassen, nacheinander zu dem Werkzeug (21), und
eine Einrichtung nach einem der Ansprüche 1 bis 8,
wobei die Vorrichtung (4) mindestens eine der Komponenten (8; 8, 9) oder mindestens ein metallisches Material (5; 5, 6) untersucht, und
wobei die Steuereinheit (10) dazu ausgelegt ist, mindestens einen bei der Steuerung des Werkzeugs (21) verwendeten Parameter und/oder Sollwert basierend auf einem durch die Vorrichtung (4) gelieferten Ergebnis (482) auszuwählen.

10. Industrieanlage (1) nach Anspruch 9, ferner umfassend eine Vorrichtung (20) zum Umherbewegen des Werkzeugs (21), und
wobei die Industrieanlage (1) zum Herstellen von Fahrzeugkarosserien oder Gebäudekonstruktionen aus den metallischen Materialien (5; 5, 6) verwendet wird.

11. Verfahren zur Verwendung bei mindestens einem einer Herstellung oder Verarbeitung metallischer Materialien (5, 6), wobei das Verfahren die folgenden Schritte umfasst
Messen der Differenz (ΔU) zwischen einer zu einer Messbrücke (40) eingehenden Spannung (U_{V}) und einer von einem Instrumentenverstärker (46) ausgegebenen Spannung (Uₒ), wobei die Messbrücke (40) einen ersten Widerstand (42) und eine erste Spule (43), die in Reihe verbunden sind, umfasst und einen zweiten Widerstand (42) und eine zweite Spule (43), die in Reihe verbunden sind, umfasst, wobei die erste Spule (43) ein Kernmaterial (431) aufweist, das als ein Referenzmaterial verwendet wird, wobei in die zweite Spule (45) nacheinander das metallische Material (5, 6) als ein Kernmaterial (451), dessen Eigenschaften untersucht werden sollen, eingesetzt wird, und wobei der Instrumentenverstärker (46) einen ersten Eingang (461), der mit der Verbindung des ersten Widerstands (42) und der ersten Spule (43) verbunden ist, und einen zweiten Eingang (462), der mit der Verbindung des zweiten Widerstands (44) und der zweiten Spule (45) verbunden ist, aufweist,
Auswerten, durch eine Auswertevorrichtung (49), wenn das metallische Material (5, 6) als das Kernmaterial (451), dessen Eigenschaften untersucht werden sollen, in der zweiten Spule (45) eingesetzt ist, der Differenz (ΔU) zwischen der zu der Messbrücke (40) eingehenden Spannung (Uv) und der von dem Instrumentenverstärker (46) ausgegebenen Spannung (Uₒ), und
Ausgeben, durch die Auswertevorrichtung (49), des Ergebnisses (482) an eine Steuereinheit (10) zum Durchführen einer Steuerung eines Werkzeugs (21) bei dem mindestens einen einer Herstellung oder Verarbeitung metallischer Materialien (5, 6) nacheinander, und
Anpassen, durch die Steuereinheit (10), der Steuerung des Werkzeugs (21) durch Auswählen, basierend auf dem von der Auswertevorrichtung (49) ausgegebenen Ergebnis, mindestens eines Parameters und/oder Sollwerts, der bei der Steuerung des Werkzeugs (21) bei der Verarbeitung des metallischen Materials (5, 6), dessen Eigenschaften durch die Schritte zum Messen und Auswerten untersucht wurden, verwendet wird, und/oder
Anpassen, durch die Steuereinheit (10), basierend auf dem von der Auswertevorrichtung (49) ausgegebenen Ergebnis, der Auslegung des Werkzeugs (21) bei dem mindestens einen einer Herstellung oder Verarbeitung des metallischen Materials (5, 6), dessen Eigenschaften durch die Schritte zum Messen und Auswerten untersucht wurden.

12. Verfahren nach Anspruch 11, wobei das Kernmaterial (451), dessen Eigenschaften untersucht werden sollen, von einer Transportvorrichtung (2) transportiert oder von einer Industrieanlage (1) verarbeitet wird und nacheinander in die zweite Spule (45) zur Untersuchung der Eigenschaften des Kernmaterials (451) eingesetzt wird.

## Revendications

1. Installation pour une usine industrielle (1) pour la production et/ou le traitement de matériaux métalliques (5, 6), l'installation et/ou l'usine industrielle (1) étant configurées pour appliquer un outil (21) pour la production et/ou le traitement de matériaux métalliques (5, 6) dans l'usine industrielle (1), l'installation comprenant
une unité de commande (10) destinée à réaliser une commande de l'outil (21) dans au moins un de la production ou du traitement de matériaux métalliques (5, 6) l'un après l'autre, et
un dispositif (4) destiné à être utilisé dans l'au moins un de la production ou du traitement des matériaux métalliques (5, 6), le dispositif (4) comprenant
un pont de mesure (40) dans lequel une première résistance (42) et une première bobine (43) sont connectées en série et dans lequel une seconde résistance (42) et une seconde bobine (43) sont connectées en série, dans laquelle la première bobine (43) a un matériau de base (431) qui est utilisé en tant que matériau de référence et dans laquelle la seconde bobine (45) est configurée de manière telle que, dans la bobine peut être placé, l'un après l'autre, le matériau métallique (5, 6) en tant que matériau de base (451) dont les propriétés doivent être examinées,
un amplificateur instrumental (46) ayant une première entrée (461), qui est connectée à la connexion de la première résistance (42) et de la première bobine (43), et une seconde entrée (462), qui est connectée à la connexion de la seconde résistance (44) et de la seconde bobine (45), et
un dispositif d'évaluation (49) destiné à évaluer, lorsque le matériau métallique (5, 6) en tant que matériau de base (451) dont les propriétés doivent être examinées est placé dans la seconde bobine (45), la différence (ΔU) entre une tension (U_{V}) entrée dans le pont de mesure (40) et une tension (Uo) sortie de l'amplificateur instrumental (46), et destiné à envoyer le résultat (482) à l'unité de commande (10) pour adapter la commande de l'outil (21) réalisée par l'unité de commande (10),
dans laquelle l'unité de commande (10) est configurée pour adapter la commande de l'outil (21) en choisissant, sur la base du résultat envoyé par le dispositif d'évaluation (49), au moins un paramètre et/ou une valeur de consigne utilisés dans la commande de l'outil (21) dans le traitement du matériau métallique (5, 6) dont les propriétés ont été examinées par le dispositif (4), et/ou
dans laquelle l'unité de commande (10) est configurée pour adapter, sur la base du résultat envoyé par le dispositif d'évaluation (49), la configuration de l'outil (21) dans l'au moins un de la production ou du traitement du matériau métallique (5, 6) dont les propriétés ont été examinées par le dispositif (4).

2. Installation selon la revendication 1, dans laquelle le dispositif d'évaluation (49) est configuré pour examiner la différence (ΔU) entre l'amplitude de la tension (U_{V}) entrée dans le pont de mesure (40) et l'amplitude de la tension (Uo ; Uo1 ; Uo2) sortie de l'amplificateur instrumental (46) et pour examiner le déphasage (φ ; φ1 ; φ2) entre la tension (Uv) entrée dans le pont de mesure (40) et la tension (Uo ; Uo1 ; Uo2) sortie de l'amplificateur instrumental (46).

3. Installation selon la revendication 1 ou 2,
dans laquelle la valeur de résistance électrique de la première résistance (42) et la valeur de résistance électrique de la seconde résistance (44) sont égales l'une à l'autre, et
dans laquelle l'inductivité de la première bobine (43) et l'inductivité de la seconde bobine (45) sont égales l'une à l'autre.

4. Installation selon l'une quelconque des revendications précédentes, dans laquelle le matériau de base (431) de la première bobine (43) est fait d'acier ou d'aluminium.

5. Installation selon l'une quelconque des revendications précédentes, dans laquelle le dispositif (4) est configuré pour examiner la microstructure et/ou la composition chimique du matériau de base (451) de la seconde bobine (45).

6. Installation selon l'une quelconque des revendications précédentes, dans laquelle la seconde bobine (45) comprend une forme géométrique qui est adaptée à la forme géométrique du matériau de base (451) dont les propriétés doivent être testées ou examinées.

7. Installation selon l'une quelconque des revendications précédentes, dans laquelle l'outil (21) est un outil choisi parmi un d'un outil de soudage, d'un outil de poinçonnage, d'un outil de découpage à l'emporte-pièce, d'un outil de perçage, d'un outil de fraisage, d'un outil de tournage, d'un outil de tournevissage.

8. Installation selon l'une quelconque des revendications précédentes, dans laquelle l'installation est une installation de soudage, comprenant
un outil de soudage (21) destiné à produire un joint soudé (7), l'un après l'autre, sur au moins deux différents composants (8 ; 8, 9) qui comprennent chacun au moins un matériau métallique (5 ; 5, 6),
dans laquelle l'unité de commande est une unité de commande de soudage (10) destinée à commander l'outil de soudage (21),
dans laquelle l'unité de commande de soudage (10) est configurée pour choisir au moins un paramètre et/ou une valeur de consigne utilisés dans la commande de l'outil de soudage (21) sur la base d'un résultat (482) fourni par le dispositif (4), et
dans laquelle le dispositif (4) est configuré pour examiner l'au moins un matériau métallique (5 ; 5, 6) des au moins deux composants différents (8 ; 8, 9).

9. Usine industrielle (1) pour la production et/ou le traitement de matériaux métalliques (5, 6), l'usine industrielle (1) comprenant un outil (21) qui est commandé par une unité de commande (10) pour monter ou démonter une connexion entre au moins un matériau métallique (5, 6), un dispositif de transport (2) destiné à transporter jusqu'à l'outil (21), l'un après l'autre, des composants (8 ; 8, 9) qui comprennent au moins un matériau métallique (5 ; 5, 6), et
une installation selon l'une quelconque des revendications 1 à 8,
dans laquelle le dispositif (4) examine au moins un des composants (8 ; 8, 9) ou au moins un matériau métallique (5 ; 5, 6), et
dans laquelle l'unité de commande (10) est configurée pour choisir au moins un paramètre et/ou une valeur de consigne utilisées dans la commande de l'outil (21) sur la base d'un résultat (482) fourni par le dispositif (4).

10. Usine industrielle (1) selon la revendication 9, comprenant en outre un dispositif (20) pour déplacer l'outil (21), et
dans laquelle l'usine industrielle (1) est utilisée pour produire des carrosseries de véhicule ou des constructions de bâtiment à partir des matériaux métalliques (5 ; 5, 6).

11. Procédé destiné à être utilisé dans au moins un de la production ou du traitement de matériaux métalliques (5, 6), le procédé comprenant les étapes de
mesure de la différence (ΔU) entre une tension (Uv) entrée dans un pont de mesure (40) et une tension (Uₒ) sortie d'un amplificateur instrumental (46), dans lequel le pont de mesure (40) comprend une première résistance (42) et une première bobine (43) qui sont connectées en série et comprend une seconde résistance (42) et une seconde bobine (43) qui sont connectées en série, dans lequel la première bobine (43) a un matériau de base (431) qui est utilisé en tant que matériau de référence, dans lequel, dans la seconde bobine (45) est placé, l'un après l'autre, le matériau métallique (5, 6) en tant que matériau de base (451) dont les propriétés doivent être examinées, et dans lequel l'amplificateur instrumental (46) a une première entrée (461), qui est connectée à la connexion de la première résistance (42) et la première bobine (43), et une seconde entrée (462), qui est connectée à la connexion de la seconde résistance (44) et la seconde bobine (45),
évaluation, par un dispositif d'évaluation (49), lorsque le matériau métallique (5, 6) en tant que matériau de base (451) dont les propriétés doivent être examinées est placé dans la seconde bobine (45), de la différence (ΔU) entre la tension (U_{V}) entrée dans le pont de mesure (40) et la tension (Uₒ) sortie de l'amplificateur instrumental (46), et
envoi, par le dispositif d'évaluation (49), du résultat (482) à une unité de commande (10) pour réaliser une commande d'un outil (21) dans l'au moins un de la production ou du traitement de matériaux métalliques (5, 6) l'un après l'autre, et
adaptation, par l'unité de commande (10), de la commande de l'outil (21) en choisissant, sur la base du résultat envoyé par le dispositif d'évaluation (49), au moins un paramètre et/ou une valeur de consigne utilisés dans la commande de l'outil (21) dans le traitement du matériau métallique (5, 6) dont les propriétés ont été examinées par les étapes de mesure et d'évaluation, et/ou
adaptation, par l'unité de commande (10), sur la base du résultat envoyé par le dispositif d'évaluation (49), de la configuration de l'outil (21) dans l'au moins un de la production ou du traitement du matériau métallique (5, 6) dont les propriétés ont été examinées par les étapes de mesure et d'évaluation.

12. Procédé selon la revendication 11, dans lequel le matériau de base (451) dont les propriétés doivent être examinées est transporté par un dispositif de transport (2) ou traité par une usine industrielle (1) et est placé, l'un après l'autre, dans la seconde bobine (45) pour examiner les propriétés du matériau de base (451).
